# EUROPEAN PATENT APPLICATION

(11) **EP 1 780 055 A1**
(43) Date of publication of application: **02.05.2007**
(21) Application number: 05753412.5
(22) Date of filing: 21.06.2005
(51) Int. Cl.: B60C 17/01

(54) **AIR BLADDER FOR SAFETY TIRE**

(30) Priority: 03.08.2004 JP 2004226787
(71) Applicant: Bridgestone Corporation, Tokyo 104-8340 (JP)
(72) Inventor: TANAKA, Yoshitaka, BRIDGESTONE CORPORATION, Kodaira-shi, Tokyo 1878531 (JP)
(74) Representative: Whalley, Kevin
(86) International application number: PCT/JP2005/011367
(87) International publication number: WO 2006/013681

(57) **Abstract**

There is provided an air bladder for a safety tire in which an air-impermeable layer is optimized to reduce an incidence of manufacturing defects. A hollow toric air bladder 1 is accommodated in a tire 2 and filled with air at an internal pressure determined in relation to the given pressure of the tire 2. Under the normal internal pressure state of the tire 2, a cavity S₁ is formed at least between an inner surface of the tire 2 and the bladder 1. When the internal pressure in the cavity S₁ of the tire 2 is suddenly lowered due to puncture or the like, the air bladder 1 radially expands and eventually reaches to the inner surface of the tire 2 to take over load support from the tire 2. The air bladder 1 comprises an air-impermeable layer 6 maintaining the internal pressure of the air bladder in the inner surface of the air bladder, and the air-impermeable layer 6 consists of at least one hollow toric layer 7 and at least one auxiliary layer 8 disposed on at least a part of the hollow toric layer 7.

## Description

### TECHNICAL FIELD

The present invention relates to a hollow toric air bladder which is to be accommodated in a tire and filled with air at an internal pressure determined in relation to a given air pressure of the tire to form a cavity at least between an inner surface of the tire and the bladder under the normal internal pressure state of the tire and to radially expand with a decrease in the internal pressure of the tire to take over load support from the tire. Particularly, the present invention directs to reduce an incidence of manufacturing defectives of such an air bladder.

### RELATED ART

As a safety tire which can travel for a certain distance even under the runflat state where the tire internal pressure is suddenly lowered due to puncture or the like, known are a tire in which a tire load is taken over by a reinforcing member such as a reinforcing tube, reinforcing rubber and reinforcing belt, a foaming body, elastic body, or core; and a tire in which a sealant is applied or filled to block a damaged portion such as a hole generated on the tire to prevent the internal pressure from dropping. However, manufacturing processes of these conventional tire are complicated, which results in a higher incidence of manufacturing defectives and lower manufacturing efficiency in many cases.

In order to solve the above problems, JP 2002-172918 A, JP 2002-192923 A, JP 2002-200906 A, JP 2004-90807 A and JP 2003-39912 A, for example, describe hollow toric air bladders which are accommodated inside the safety tires and take over load support from the tires by inflating and deforming with a decrease of the tire internal pressure under the runflat state where the tire internal pressure is lowered. Each of these air bladders has an air-impermeable layer for keeping the internal pressure of the air bladder in the normal state where the air bladder is accommodated in the tire under the predetermined internal pressure, and a reinforcing layer for contacting the inner surface of the tire in a radially expanded state, the reinforcing layer covering at least a part of this air-impermeable layer and extending over the entire circumference of the air bladder. In a manufacturing process of such an air bladder, when a foreign object exits between the air impenetrable layer and the reinforcing layer or between the air impenetrable layer and a building drum or a vulcanizing mold which directly contact the air-impermeable layer, the foreign object may damage the air-impermeable layer. If the air bladder thus damaged is accommodated in a tire and pressurized, it is likely that the damage is enlarged to hardly maintain the pressure in the air bladder cannot be maintained, and that, in an extreme case, the air bladder itself is destroyed, so that the tire cannot serve as a safety tire.

### DISCLOSURE OF THE INVENTION

Therefore, it is an object of the present invention to provide an air bladder for a safety tire in which an air-impermeable layer is optimized to reduce an incidence of manufacturing defectives.

In order to achieve the above-mentioned object, the present invention is a hollow toric air bladder which is to be accommodated in a tire and filled with air at an internal pressure determined in relation to a given air pressure of the tire to form a cavity at least between an inner surface of the tire and the bladder under the normal internal pressure state of the tire and to radially expand with a decrease in the internal pressure of the tire to take over load support from the tire, said air bladder comprising an air-impermeable layer maintaining the internal pressure of the air bladder in the inner surface of the air bladder, wherein said air-impermeable layer consists of at least one hollow toric layer and at least one auxiliary layer disposed on at least a part of said hollow toric layer.

As used herein, the term "given internal pressure" refers to the internal pressure regulated for a safety tire accommodating the air bladder by an industrial specification, standard or the like such as JATMA, TRA and ETRTO which are effective in the area where the tire is manufactured, sold or used, and specified according to the load capacity. The term "internal pressure determined in relation to a given internal pressure" refers to such an internal pressure that a cavity can be formed between the outer surface of the air bladder and the inner surface of the tire under the air-filled state that the given internal pressure is applied to the tire, and that the air bladder can radially expand with a decrease in the internal pressure of the tire to take over load support from the tire under the runflat state that the internal pressure of the tire has been lost, and the internal pressure is preferably equal to or up to 20% more than the given internal pressure.

A gas permeability of the air-impermeable layer at 60 degrees C is preferably within a range of 1.0 x 10⁻¹⁰ cm³*cm/(cm²*s*cmHg) to 5.0 x 10⁻⁹ cm³*cm/(cm²*s*cmHg). The term "gas permeability" as used herein means a result acquired by a measurement according to JIS(Japanese Industrial Standards) K 7126 with using an air.

In addition, the hollow toric layer preferably has the thickness within a range of 0.5 mm to 1.5 mm.

Furthermore, the total thickness of the hollow toric layer and the auxiliary layer is preferably within a range of 1.2 mm to 5.0 mm.

The air bladder, when accommodated in a tire, is preferably disposed in an area corresponding to at least the side portion of the tire. In this case, the auxiliary layer, when the air bladder is accommodated in a tire, is more preferably disposed in an area corresponding to at least the side portion and the crown portion of the tire.

The hollow toric layer is preferably formed in such a manner that a sheet-shaped material is rolled into a toric shape to form overlap portions along the circumferential direction of the air bladder and the overlap portions are joined together. The auxiliary layer is preferably disposed on a portion other than the overlap portion of the hollow toric layer.

The auxiliary layer is preferably made of a resin sheet or a resin film.

### BRIEF DESCRIPTION OF THE DRAWINGS

[FIG. 1] FIG. 1 is a widthwise sectional view of a safety tire accommodating a typical air bladder according to the present invention, shown in a state where the safety tire is mounted on a rim and filled with air at a given internal pressure.
[FIG. 2] FIG. 2 is a widthwise sectional view of a safety tire accommodating another exemplificative air bladder according to the present invention, shown in a state where the safety tire is mounted on a rim and filled with air at a given internal pressure.
[FIG. 3] FIG. 3 is a widthwise sectional view of a safety tire accommodating further exemplificative air bladder according to the present invention, shown in a state where the safety tire is mounted on a rim and filled with air at a given internal pressure.
[FIG. 4] FIG. 4 is a widthwise sectional view of a safety tire accommodating yet another exemplificative air bladder according to the present invention, shown in a state where the safety tire is mounted on a rim and filled with air at a given internal pressure.
[FIG. 5] FIG. 5 is a widthwise sectional view of a safety tire accommodating still another exemplificative air bladder according to the present invention, shown in a state where the safety tire is mounted on a rim and filled with air at a given internal pressure.

### REFERENCE SYMBOLS

- 1: air bladder
- 2: safety tire
- 3: rim
- 4,5: air-filling valve
- 6: air-impermeable layer
- 7: hollow toric layer
- 8,8': auxiliary layer
- 9: support layer
- 10: side portion of the tire
- 11: crown portion of the tire

### BEST MODE FOR CARRYING OUT THE INVENTION

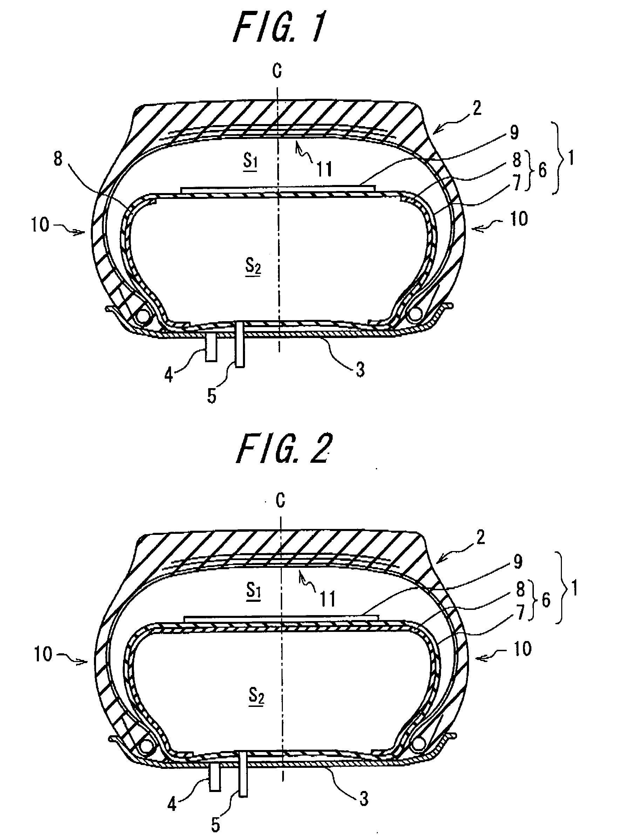

Hereinafter, embodiments of the present invention will be described with reference to the drawings. FIG. 1 is a widthwise sectional view of a safety tire accommodating a typical air bladder for a safe tire (hereinafter referred to as "air bladder") according to the present invention, shown in a state where the safety tire is mounted on a rim and filled with air at a given internal pressure.

An air bladder 1 has a hollow toric shape and is accommodated in a tire 2 to form a safety tire. This safety tire is mounted on a rim 3 to form a tire assembly. The tire 2 is filled with air at a given air pressure via an air-filling valve 4 and the air bladder 1 is filled with air at an internal pressure determined in relation to the given pressure of the tire 2 via an air-filling valve 5. As a result, as shown in FIG.1, cavities S₁ and S₂ are formed in the tire 2 and the air bladder 1, respectively. When the internal pressure in the cavity S₁ of the tire 2 is suddenly lowered due to puncture or the like, the difference in the internal pressure between the cavities S₁ and S₂ becomes larger so that the air bladder 1 radially expands and eventually reaches to the inner surface of the tire 2 to take over load support from the tire 2.

The main constructive feature of the present invention is that the air bladder 1 comprises an air-impermeable layer 6 maintaining the internal pressure of the air bladder in the inner surface of the air bladder, and the air-impermeable layer 6 consists of at least one (one, in FIG. 7) hollow toric layer 7 and at least one (one, in FIG. 7) auxiliary layer 8 disposed on at least a part of the hollow toric layer 7. The embodiment shown in FIG. 1 has, in order to improve running performance under the runflat state, a support layer 9 on the outer circumference of the air-impermeable layer 6 for contacting the inner surface of the tire upon radially expanding. However, the support layer 9 is not an essential configuration and can be arbitrarily disposed depending on the condition.

For the air-impermeable layer of the air bladder, as is the case with an inner liner of a tire, butyl rubber, polyester film, nylon film, polyolefin film and the like are often used. From the viewpoint of minimizing the increase in the weight of the air bladder, the thinner air-impermeable layer is more preferable as far as it can maintain the internal pressure. However, since the decrease in the thickness of the air-impermeable layer involves a decrease in its strength, the air-impermeable layer may be damaged when a foreign object exits between the air impenetrable layer and the support layer or between the air impenetrable layer and a building drum or a vulcanizing mold directly contacting the air-impermeable layer in a manufacturing process, which results in a higher incidence of manufacturing defectives.

On contrary, the air bladder 1 according to the present invention comprises the air-impermeable layer 6 consisting of at least one hollow toric layer 7 and at least one auxiliary layer 8, so that even if a portion of the hollow toric layer 7 which is reinforced by the auxiliary layer 8 is damaged. Therefore, the damage can be covered with the auxiliary layer 8 to prevent an air leak and furthermore, even when the air bladder is radially expanded, the damage of the hollow toric layer 7 can be prevented from enlarging. As a result, an incidence of manufacturing defectives can be reduced.

Merely increasing the thickness of at least a portion of the air-impermeable layer is still likely to result in an immediate air leak when the air-impermeable layer is damaged. Contrarily, the air-impermeable layer 6 according to the present invention, which consists of the hollow toric layer 7 and the auxiliary layer 8, has an advantage that even if one of the hollow toric layer 7 and the auxiliary layer 8 is damaged, the other layer can prevent an air leak.

A gas permeability of the air-impermeable layer 6 at 60 degrees C is preferably within a range of 1.0 x 10⁻¹⁰ cm³*cm/(cm²*s*cmHg) to 5.0 x 10⁻⁹ cm³*cm/(cm²*s*cmHg). When the gas permeability is less than 1.0 x 10⁻¹⁰ cm³*cm/(cm²*s*cmHg), the thickness of the air-impermeable layer 6 may be excessively reduced, so that it is likely that rupture strength of the air-impermeable layer in a green rubber state before vulcanization is insufficient. On the other hand, when the gas permeability is more than 5.0 x 10⁻⁹ cm³*cm/(cm²*s*cmHg), the air-impermeable layer may hardly maintain the internal pressure of the air bladder 1. In addition, it is more preferable that both of the hollow toric layer 7 and the auxiliary layer 8 satisfy the above-mentioned permeability range because even if one of the layers is damaged, the other layer can certainly maintain the internal pressure.

In addition, the thickness of the hollow toric layer 7 is preferably within a range of 0.5 mm to 1.5 mm. When the thickness of the hollow toric layer 7 is less than 0.5 mm, the hollow toric layer 7 may be easily damaged and furthermore, the shape of the hollow toric layer 7 may be difficult to be maintained so that its handling during manufacturing will be difficult. On the other hand, when the thickness of the hollow toric layer 7 is more than 1.5 mm, more time may be needed for its vulcanization. The hollow toric layer 7 may be made of, for example, butyl rubber, polyester film, nylon film, polyolefin film and the like, as is the case with an inner liner of a tire.

Furthermore, in the air-impermeable layer 6, the total thickness of the hollow toric layer 7 and the auxiliary layer 8 is preferably within a range of 1.2 mm to 5.0 mm. When the total thickness of the hollow toric layer 7 and the auxiliary layer 8 is less than 1.2 mm, the shape of the air bladder is difficult to be maintained in the normal running state and the air bladder 1 is likely to scrape against the inner surface of the tire 2 to be broken. On the other hand, when the total thickness is more than 5.0 mm, the weight of the air bladder 1 may significantly increase so that running performance is likely to be deteriorated.

The auxiliary layer 8, when accommodated in the tire 2, is preferably disposed in an area corresponding to the side portions 10, 10 of the tire 2, as shown in FIG. 1. In the air-impermeable layer 6, the areas corresponding to the side portions 10, 10 of the tire 2 are the most largely deformed portions upon radially expanding so that even a tiny scratch may easily grow larger. Therefore, disposing the auxiliary layers 8 in the areas to reinforce the air bladder is effective in reducing an incidence of manufacturing defectives. In this case, the auxiliary layer 8, when accommodated in the tire 2, is more preferably disposed in an area corresponding to the side portions 10, 10 and the crown portion 11, as shown in FIG. 2. The area of the air-impermeable layer 6 corresponding to the crown portion 10 is also deformed relatively largely upon radially expanding and therefore, disposing the auxiliary layers 8 in the area to reinforce the air bladder is effective in reducing an incidence of manufacturing defectives.

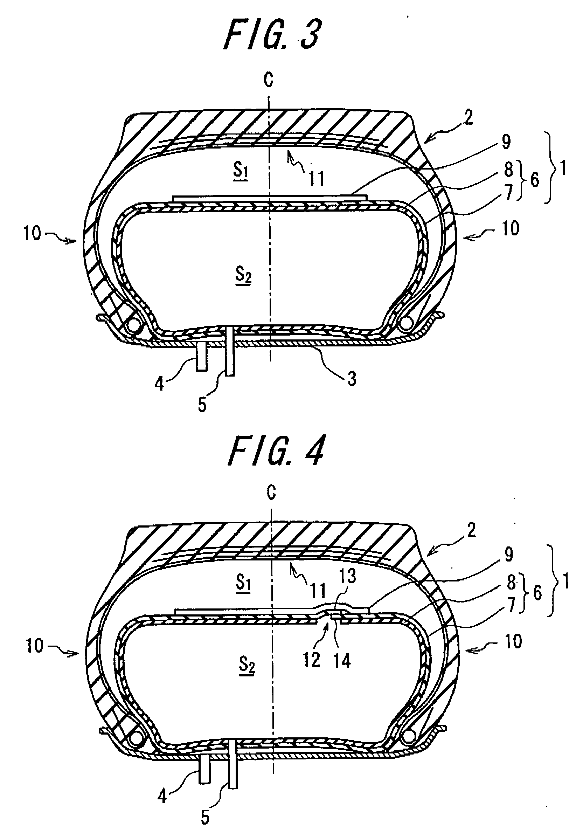

When the hollow toric layer 7 is formed by means of extrusion molding from a die, the auxiliary layer 8 may have a toric shape and may be provided on the entire cross-sectional surface of the air-impermeably layer, as shown in FIG. 3. The hollow toric layer 7 may be also formed in such a manner that a sheet-shaped material is rolled into a toric shape to form overlap portions 12 along the circumferential direction of the air bladder 1, and the overlap portions are joined together. In this case, the auxiliary layer 8 is preferably disposed on a portion other than the overlap portion 12, as shown in FIG. 4. The overlap portions 12 are formed by overlapping a sheet shaped material, so that, without reinforcing the air bladder by the auxiliary layer 8, when a portion 13 constituting the outer surface of the overlap portion 12 is damaged, a portion 14 constituting the inner surface of the overlap portion 12 instead of the auxiliary layer 8 covers the damage to prevent an air leak as well as to prevent the damage of the hollow toric layer 7 from growing larger upon radially expanding. In the embodiment shown in FIG. 4, the overlap portion 12 and the air-filling valve 5 are oppositely disposed with respect to an equatorial plane C of the tire so as to prevent the air-filling valve 5 from impeding stitching when the overlap portions 12 are joined together.

Although the auxiliary layer 8 may be made of the same material as that of the hollow toric layer 7, it is preferably made of a resin sheet or a resin film from the viewpoint of reducing the weight and cost. As preferable materials of a resin sheet and a resin film, PET (ethylene terephthalate), PP (polypropylene), TPU (thermoplastic urethane), TPO (thermoplastic olefin), VC (vinyl chloride) and RB (butadiene resin) may be cited, by way of example.

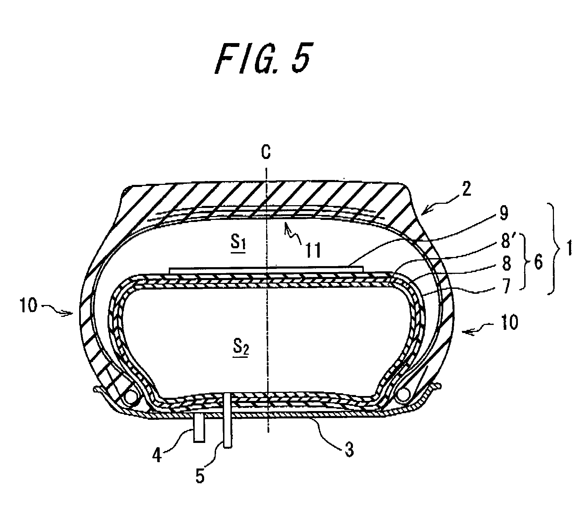

The above description shows only a part of possible embodiments of the present invention and various modifications can be made within the scope of the claims. For example, the auxiliary layer is not limited to a single layer but two auxiliary layers 8, 8' may be disposed, as shown in FIG. 5. Moreover, the embodiments shown in FIGs. 1-5 have the auxiliary layer 8 disposed inside of the hollow toric layer 7, however, the auxiliary layer 8 may be disposed outside of the hollow toric layer 7 although illustration thereof is omitted.

### EXAMPLES

Next, air bladders for safety tires according to the present invention are experimentally produced and evaluated for their performance. The result will be explained below.

### (Examples 1 to 7)

Air bladders of Examples 1 to 7 are air bladders for a safety tire having a tire size of 495/45R22.5 and configurations shown in FIG. 1 (Example 1), FIG. 2 (Example 2), FIG. 3 (Example 3), FIG. 4 (Example 4), FIG. 5 (Example 5), FIG. 6 (Example 6) and FIG. 7 (Example 7). The hollow toric layer of each of the air bladders of Examples is made of butyl rubber, having the gas permeability of 2.0 x 10⁻⁹ cm³/ cm²*s*Pa and the thickness of 0.5 mm. The auxiliary layer of each of the air bladders of Examples 1, 2, 3, 5 and 7 is made of butyl rubber, having the gas permeability of 2.0 x 10⁻⁹ cm³/ cm²*s*Pa and the thickness of 0.5 mm. The auxiliary layer of each of the air bladders of Examples 4 and 6 is made of a PET sheet, having the thickness of 0.05 mm. The outer circumferential surface of the air-impermeable layer of each of the air bladders of Examples is tightly surrounded by the support layer, which is formed of a rubber-coated non-woven fabric having the thickness of 1.0 mm.

### (Conventional Examples 1 and 2)

For comparison, air bladders for a safety tire are also experimentally produced, in which the outer circumferential surface of an air-impermeable layer, which is made of butyl rubber having the gas permeability of 2.0 x 10⁻⁹ cm³/cm²*s*Pa and the thickness of 0.5 mm (in Conventional Example 1) and 1.0 mm (in Conventional Example 2), is tightly surrounded by the support layer, which is formed of rubber-coated non-woven fabric having the thickness of 1.0.

### (Test Procedure)

For each of Examples and Conventional Examples, a hundred of air bladders are produced by means of vulcanization molding. The internal pressure of 10kPa is applied to each of the obtained air bladders and soap solution is applied on the surfaces thereof. After the air bladders are allowed for 60 seconds, visual inspections whether an air bubble comes out from the air bladder are conducted . Then, an air bladder with air bubbles is sorted as a defective.

The incidences of defectives are 8.0% in Conventional Example 1, 6.5% in Conventional Example 2, 2.5% in Example 1, 0.5 % in Example 2, 0 % in Example 3, 0% in Example 4, 0.1% in Example 5, 0.1% in Example 6 and 0% in Example 7. As above, it is appreciated that the air bladders of Examples 1 to 7 have the lower incidence of manufacturing defects than the air bladders of Conventional Examples 1 and 2.

### INDUSTRIAL APPLICABILITY

According to the present invention, it is possible to provide an air bladder for a safety tire which can reduce an incidence of manufacturing defectives by optimizing an impermeable layer.

## Claims

1. A hollow toric air bladder which is to be accommodated in a tire and filled with air at an internal pressure determined in relation to a given air pressure of the tire to form a cavity at least between an inner surface of the tire and the bladder under the normal internal pressure state of the tire and to radially expand with a decrease in the internal pressure of the tire to take over load support from the tire,
said air bladder comprising an air-impermeable layer maintaining the internal pressure of the air bladder in the inner surface of the air bladder, wherein said air-impermeable layer consists of at least one hollow toric layer and at least one auxiliary layer disposed on at least a part of said hollow toric layer.

2. The air bladder for a safety tire according to claim 1, wherein a gas permeability of said air-impermeable layer at 60 degrees C is within a range of 1.0 x 10⁻¹⁰ cm³*cm/(cm²*s*cmHg) to 5.0 x 10⁻⁹ cm³*cm/(cm²*s*cmHg).

3. The air bladder for a safety tire according to claim 1 or 2, wherein said hollow toric layer has the thickness within a range of 0.5 mm to 1.5 mm.

4. The air bladder for a safety tire according to any one of claims 1 to 3, wherein the total thickness of the hollow toric layer and the auxiliary layer of said air-impermeable layer is within a range of 1.2 mm to 5.0 mm.

5. The air bladder for a safety tire according to any one of claims 1 to 4, wherein said auxiliary layer, when the air bladder is accommodated in a tire, is disposed in an area corresponding to at least the side portion of the tire.

6. The air bladder for a safety tire according to claim 5, wherein said auxiliary layer, when the air bladder is accommodated in a tire, is disposed in an area corresponding to at least the side portion and the crown portion of the tire.

7. The air bladder for a safety tire according to any one of claims 1 to 6, wherein said hollow toric layer is formed in such a manner that a sheet-shaped material is rolled into a toric shape to form overlap portions along the circumferential direction of the air bladder and that said overlap portions are joined together, and said auxiliary layer is disposed on a portion other than said overlap portion of the hollow toric layer.

8. The air bladder for a safety tire according to any one of claims 1 to 6, wherein said auxiliary layer is made of a resin sheet or a resin film.
